# EUROPEAN PATENT APPLICATION

(11) **EP 1 702 511 A1**
(43) Date of publication of application: **20.09.2006**
(21) Application number: 06005038.2
(22) Date of filing: 13.03.2006
(51) Int. Cl.: A01K 85/16

(54) **Fishing lure**

(30) Priority: 17.03.2005 IT TO20050179
(71) Applicant: Ballabio, Umberto, 10040 Valdellatorre TO (IT); Capello, Luciano, 14057 Isola d'Asti AT (IT)
(72) Inventor: Ballabio, Umberto, 10040 Valdellatorre (TO) (IT); Capello, Luciano, 14057 Isola d'Asti (AT) (IT)
(74) Representative: Lotti, Giorgio

(57) **Abstract**

Fishing lure (1) provided with a main body (2), and with a blade (3) which is arranged frontally to the body (2) in order to endow the body (2) it self with a specific hydro-dynamic behaviour, and with at least one eyelet (4) (6) arranged along the main body (2) for hooking armatures with barbs: the main body (2) being defined by a first planar portion (10) which has a substantially shape, and by a second planar portion (20) which is integral with and transverse to the first planar portion (10) and which also defines the said blade (3).

## Description

The present invention relates The present invention refers to a fishing lure.

In the field of amateur fishing, the use of fishing lures which imitate the shape and form of fish is well-known, even to the extent of reproducing the movement of fish in order to exert a strong luring attraction in relation to the real fish themselves. These fishing lures comprise a main body with a longitudinal profile, a blade which is inserted frontally and transverse to the body and which is suitable for endowing the body itself with a specific hydro-dynamic behaviour in terms of the depths to which the fishing lure may sink, as well as in terms of mobility, and a number of eyelets which are distributed along the main body for hooking armatures with barbs.

In the kinds of fishing lures which have just been described above, the intrinsical shape and characteristics of the main body, as well as of the blade, are continually up-dated and modified to increase their luring capacity, which is frequently also to the detriment of the end price of the lures themselves.

Recent marketing surveys, however, have shown that the end price of fishing lures, also taking into account the high rate of probability that they will be lost during the activity of fishing, is a determining factor in their purchase, thus the aim of the present invention is to produce a fishing lure which, while maintaining a high level of luring capacity, will also be simple and cost- effective to produce.

According to the present invention, a fishing lure will be produced, presenting a longitudinal axis and comprising a main body, a blade which is arranged frontally to the body in order to endow the body itself with a specific hydro-dynamic behaviour, and at least one eyelet arranged along the main boy for the hooking of armatures with barbs; the fishing lure being characterised by the fact that the main body comprises a first planar portion with a substantially shape, and a second planar portion which is integral with and transverse to the first planar portion, and which also defines the said blade.

The present invention will now be described with reference to the attached drawings, which illustrate a non-limiting form of embodiment of the present invention, and in which:
- FIGURE 1 is a perspective view of a preferred form of embodiment of the fishing lure which is the subject of the present invention;
- FIGURE 2 is a lateral elevation view on a reduced scale of a detail of the fishing lure which is shown in FIGURE 1;
- FIGURE 3 is a plan view on a reduced scale of a further detail of the fishing lure which is shown in FIGURE 1;
- FIGURE 4 is an exploded perspective view on a reduced scale of the fishing lure which is shown in FIGURE 1;
- FIGURE 5 is a perspective view, on an enlarged scale, of a detail which is shown in FIGURE 4; and
- FIGURE 6 is a view from below of a detail of the fishing lure which is shown in FIGURE 1.

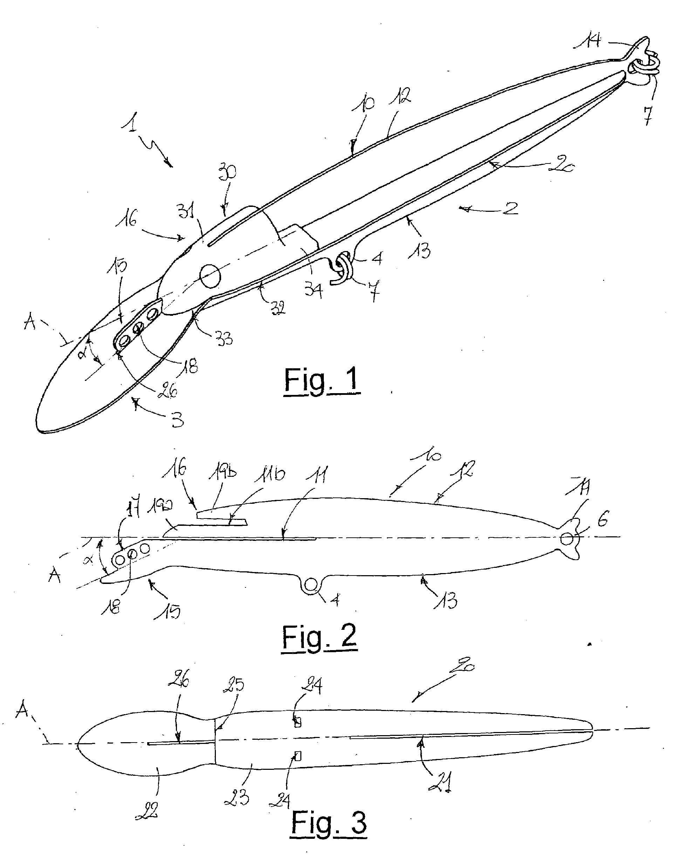

With reference to FIGURE 1, the number 1 indicates, in its entirety, a fishing lure which is illustrated in FIGURE 1 itself in an assembled configuration.

The fishing lure presents a longitudinal axis A, and comprises a main body 2 which extends along the axis A itself, and a blade 3, which is arranged frontally and transverse to the body 2, and is inclined at an angle α in relation to the axis A in order to endow the body 2 itself with a specific hydro-dynamic behaviour, both in terms of the depth which the fishing lure 1 is able to reach, as well as in terms of the mobility of the fishing lure 1.

The fishing lure 1 also comprises a ventral eyelet 4 which is arranged in an intermediate position along the main body 2, a caudal eyelet 6 which is arranged at the end of the body 2, and, for each eyelet 4 and 6, a respective ring 7 for hooking armatures with barbs. (which are noted but not illustrated).

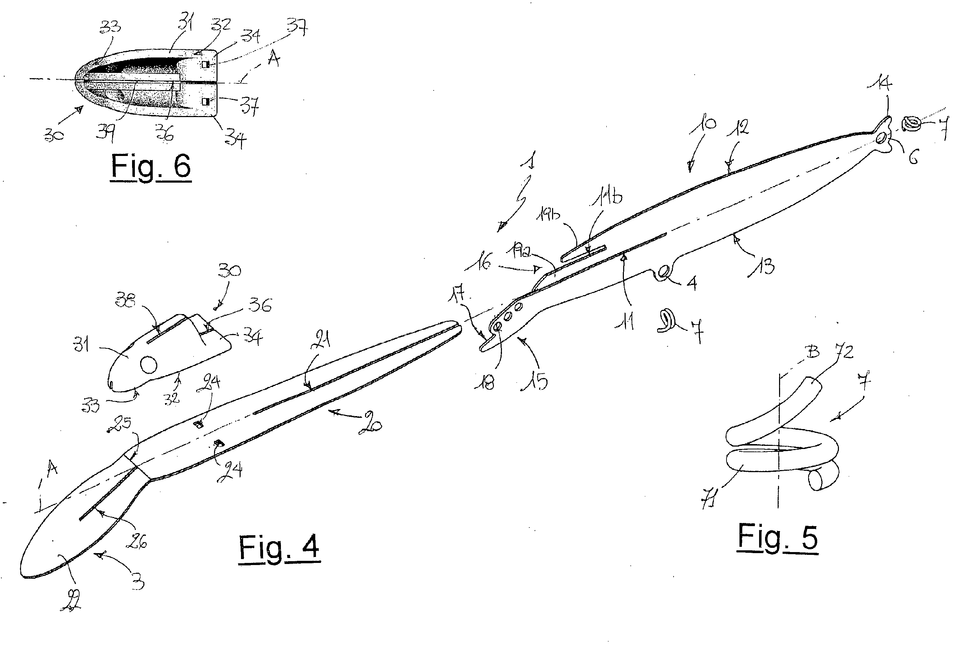

For reasons of greater clarity, the description of the fishing lure 1 which follows will refer to a non-assembled configuration of the fishing lure 1 itself, and with,particular reference to FIGURE 4.

The body 2 comprises two foils 10 and 20, which are made of metallic material, and which are suitable for being fitted into each other along the axis A in order to be arranged transverse to each other. In addition, each foil 10 and 20 is preferably, but not necessarily, produced and shaped by means of chemical photo-cutting, and comprises a respective central notch 11 and 21, which extends longitudinally and parallel to the axis A, and which is open at one of the ends of the relative foils 10 and 20 in order to permit the reciprocal fitting of the foils 10 and 20 themselves.

According to what is better illustrated in FIGURE 2, the foil 10 presents a substantially shape which is delimited by an upper dorsal profile 12 and a lower ventral profile 13 which are arranged opposite the axis A and is, in addition, provided with a tail 14 which is arranged in correspondence with the axis A in order to bring the dorsal profile 12 and the ventral profile 13 closer to each other.

The notch 11 presents a width which is substantially equal to a thickness of the foil 20, and extends partially inside the foil 10 along the axis A starting from a frontal portion 16 of the foil 10 itself which is axially opposite the tail 14, which is centrally crossed by the eyelet 6. Instead, the other eyelet 4 is arranged substantially a third of the way along the length of the ventral profile 13, but its position may be varied in the case that it might still be necessary to add a further eyelet 4 along the ventral profile 13 itself, in the case, for example, that the fishing lure 1 is of large dimensions.

In addition, the foil 10 comprises a frontal hooking rostrum 15, which modifies the movement of the ventral profile 13 in correspondence to the frontal portion 16, and which extends from the front towards the outside starting from the frontal portion 16 itself in a direction which is at an angle in relation to the axis A. The rostrum 15 presents an abutment profile 17 which is inclined at an angle of α in relation to the axis A in the same direction as the rostrum 15 itself, and three regulating holes 18, which are obtained through the rostrum 15, are arranged side by side with each other in a direction which is parallel to the profile 17 and are shifted in relation to the profile 17 itself.

Finally, the foil 10 presents a further notch 11b, which extends towards the inside of the foil 10 itself starting from the portion 16, and is arranged parallel to the axis A between the dorsal profile 12 and the notch 11. The additional notch 11b presents a width which is greater than the width of the notch 11, and identifies two appendages 19a and 19b in the foil 10, of which the appendage 19a is axially longer than the appendage 19b, and is delimited by the notches 11 and 11b, while the appendage 19b is a truncated appendage, and is delimited by the notch 11b and the dorsal profile 12.

As is better illustrated in FIGURE 3, the foil 20 presents, in plan view, a brush shape which develops symmetrically in relation to the axis A, and comprises a head portion 22 and an elongated body 23 which taper in relation to each other in correspondence to their union point.

The body 23 also tapers on the side which is opposite the portion 22, and is partially crossed by the notch 21, which starts from the part opposite the portion 22 itself, and which presents a width which is substantially equal to a thickness of the foil 10. In addition, the body 22 presents two quadrangular slits 24, which are arranged symmetrically opposite the axis A, and which are placed in a position which is substantially intermediate between the end of the notch 21 and the portion 22. In addition, the body 23 presents two quadrangular slits 24, which are arranged symmetrically opposite the axis A, and which are located in a position which is substantially intermediate between the end of the notch 11 and the portion 22.

The portion 22 is produced in a single piece with the body 23, and is delimited in relation to the body 23 itself by a weakening line 25, which is arranged transverse to the axis A and which permits, as will be better explained below, the partial folding back of the portion 22 itself in such a way as to abut the profile 17, hence defining the blade 3. Finally, the head portion 22 is provided with a passing slot 26 which extends along the axis A starting from the line 24 in order to cover a length which is substantially equal to a half of an overall axial length of the portion 22 itself.

Finally, as is also better illustrated in FIGURE 6, the fishing lure 1 comprises a balancing head 30, which is arranged axially aligned to the blade 3 and partially abutting the blade 3 itself, and is integral with both the foils 10 and 20.

The head 30 is defined by a shaped body 31 which is substantially hollow and is open at the lower part, its lower part being delimited by a flat surface 32 which is parallel to the axis A, and by an additional flat surface 33 which is inclined at an angle of α in relation to the axis A.

In addition, the head 30 comprises two rear fins 34, which extend laterally in relation to each other from the body 31 starting from a rear surface 35 of the body 31 itself, and which remain parallel to the surface 32. The two fins 34 are separated from each other by a slit 36, which is also open at the lower part, and which extends for the whole of the axial length of the head 30 and also separates the surfaces 32 and 33 from each other.

The head 30 also presents two teeth 37 which are arranged opposite the slit 36 and which extend transverse to the surface 32 in correspondence with the fins 34, and an additional upper slit 38, which is obtained in the body 31 starting from the surface 32,and which defines, with the slit 36, a septum 39.

As is illustrated in FIGURE 5, the ring 7 for the hooking of the armatures with barbs (which are noted but not illustrated) is produced by means of a spiral spring 71, which winds around a determined number of spirals around a respective axis B, and which is provided with a deformed entry portion 72 along the axis B in such a way as for each spiral to be able to progressively distance itself from the adjacent one.

The fishing lure 1 which has just been described above is particularly suitable for being packaged and sold in an un-assembled configuration, in which the two foils 10 and 20, as well as the head 30 and one or more of the rings-7 are separated from each other.

In terms of this un-assembled configuration, which also permits the production of smaller packages, the foil 10 is inserted into the notch 21 of the foil 20, which. at the same time, is inserted into the foil 11 of the foil 10 in order to determine the fitting of the two foils 10 and 20 and the positioning of the foils 10 and 20 transverse to each other.

Once the two foils 10 and 20 are assembled, in such a way as to produce the body 2, the head portion 22 of the foil 20 is partially re-folded around the weakening line 25 at an angle which is substantially equal to α, and is arranged in such a way as to abut the profile 17 of the rostrum 15 in such a way as to define the blade 3.

The re-folding of the portion 22 determines the partial insertion of the rostrum 15 though the slot 26, and the consequent arrangement of the regulating holes 18 above the blade 3, and aligned with the blade 3 itself.

The head 30, the general conformation of which may depend not only on the kind of balancing that the fishing lure 1 is to be endowed with, but also on the kind of fish that it to be attracted, is positioned on the portion 16 in such a way that the appendages 19a and 19b are progressively inserted in the slits 36 and 38 respectively, and in such a way that the septum 39 is inserted inside the notch 11b.

In practice, the slit 36 defines a housing for mounting the appendage 19a, the insertion of which inside the slit 36 itself, firstly through the fins 34, and then along the whole of the body 31, contributes to the overall stability of the fishing lure 1.

The complete positioning of the head 30 occurs when the surfaces 32 and 33 are arranged in contact with the blade 3 and, respectively, the foil 20, and when the teeth 37 are snap inserted inside the two slits 24.

The insertion of the teeth 37 into the slits 24 and the insertion of the septum 39 inside the notch 11b determine the complete anchoring of the head 30 to the body 2, as well as the substantial completion of the assembly of the fishing lure 1, rendering definitively stable the fitting between the two foils 10 e 20.

At this point, the eyelets 4 and 6 are provided with respective rings 7 by inserting the entry portion 72 of each ring 7 inside the relative eyelet 4, 6, and rotating the ring 7 itself around the relative axis B for the whole length of the relative spiral.

As has been explained above, the fishing lure 1 is suitable for being constructed starting from the production of the foils 10 and 20 by means of chemical photo-cutting, a procedure which permits an optimal development in the prototype phase of the fishing lure 1 itself, as well as the production of small and medium sized batches of high-precision metallic details of complex shapes, in a wide range of metals and thicknesses, with both a minimum of waste and a maximum of efficiency in terms of precision and speed.

In particular, chemical photo-cutting is a procedure of working metal by means of the controlled removal of metallic material which is carried out by protecting a flat element of metallic material, such as, for example, a plate of a variable thickness of between 0.02 mm ad 1.50 mm, with a photo-sensitive film, which, once it has been impressed and developed, leaves the parts of the plate which are to be removed subject to the dissolving action of chemical solutions.

Alternatively, and preferably in the case of the production of large quantities, the fishing lure 1 which has been described above may also be constructed starting from the production of the foils 10 and 20 by means of shearing workshops, or rather by advancing a flat element of metallic material, such as, for example, a tape of a thickness of up to 1.60 mm, by means of a cutting machine which is provided with an iron shearing die.

In any case, taking into consideration the simplicity of the shape of the fishing lure 1, the latter may also be produced of completely plastic material in a single co-moulding operation, with the exception, obviously, of the rings 7, or, also taking into consideration the simplicity of the assembly of the fishing lure 1 itself, the foils 10 and 20 and the head 30 could be made of plastic material and assembled as has been described above.

In conclusion, and in accordance with the above description, it is obvious that the particular conformation of the fishing lure 1 and its body 2 permits the production of the fishing lure 1 itself by means of simple, cost-effective procedures, with optimum results in terms of the end-price of the fishing lure 1 itself.

In addition, the extreme flexibility of the production procedures which have been described, above all the shearing procedure, permits the production of bodies 2 of different shapes according to the type of fish to be attracted, without, however, having any adverse effect on the end-price of the fishing lure 1 itself.

It is intended that the present invention should not be limited to the form of embodiment which is herein described and illustrated, which is to be considered as an example of a form of embodiment of the fishing lure, and which might instead be subject to further modifications relating to the shape and disposition of its parts, as well as to details pertaining to construction and assembly.

## Claims

1. Fishing lure (1) presenting a longitudinal axis (A) and comprising a main body (2), a blade (3) which is arranged frontally to the body (2) in order the endow the body (2) itself with a specific hydro-dynamic behaviour, and at least one eyelet (4) (6) arranged along the main boy (2) for the hooking of armatures with barbs; the fishing lure (1) being **characterised by** the fact that the main body (2) comprises a first planar portion (10) with a substantially shape, and a second planar portion (20) which is integral with and transverse to the first planar portion (10), and which also defines the said blade (3).

2. Fishing lure according to Claim 1,
**characterised by** the fact of comprising a hooking plate (15), which extends partially along the said blade (3) transverse to the blade (3) itself, and which is provided with one or more regulating holes (18) .

3. Fishing lure according to Claim 2,
**characterised by** the fact of comprising a balancing head (30), which is arranged axially aligned to the blade (3) and partially abutting the blade (3) itself, and which is integral with the first and second planar portions (10, 20).

4. Fishing lure according to Claim 3,
**characterised by** the fact that the said head (30) is defined by a shaped body (31) which is substantially hollow and open at the bottom, and comprising a number of anchoring elements (37, 39) which may be engaged to the said body (2).

5. Fishing lure according to Claim 4,
**characterised by** the fact that the said head (30) comprises two rear fins (34), which extend laterally in relation to each other from the body (31), and which are parallel to each other and to the second planar portion (20).

6. Fishing lure according to Claim 5,
**characterised by** the fact that the said two fins (34) define an entry between them for an assembly housing (36) which is engaged by an appendage (19a) of the said first planar portion (10).

7. Fishing lure according to any of the previous Claims from 2 to 6, **characterised by** the fact that the first and second planar portions (10, 20) are provided with respective longitudinal notches (11, 21) which are parallel to the said longitudinal axis (A), and which are slotted into each other along the said notches (11, 21).

8. Fishing lure according to Claim 7, characterise by the fact that the said blade (3) is an integral part of the second planar portion (20) being produced in a single piece with the second planar portion (20), and is delimited by a weakening line (25) which is transverse to the longitudinal axis; the blade (3) also being provided with a passing slot (26) which extends parallel to and along the longitudinal axis (A) substantially starting from the weakening line.

9. Fishing lure according to Claim 8,
**characterised by** the fact that the said hooking plate (15) is produced in a single piece with the first planar portion (10) and engages the said passing slot (26) in order to create, furthermore, an angle of inclination (α) of the blade (3) in relation to the second planar portion (20).

10. Fishing lure according to Claim 9,
**characterised by** the fact that the said hooking plate (15) presents a profile (17) which is inclined in relation to the longitudinal axis (A), and which is arranged partially through the said passing slot (26) with the relative regulating holes (18) above the blade (3).

11. Fishing lure according to Claim 10,
**characterised by** the fact that the said eyelet (4) is obtained through the first planar portion (10) in a position which is substantially intermediate along the first planar portion (10) itself.

12. Fishing lure according to Claims 10 or 11, **characterised by** the fact of comprising a further eyelet (6) which is obtained through the first planar portion (10) in a substantially terminal position along the first planar portion (10) itself.

13. Fishing lure according to Claims 11 or 12, **characterised by** the fact of comprising a ring (7) for hooking armatures with barbs to the said eyelet (4) (6) produced by means of a spiral spring (71) which is provided with a deformed lead-in portion (72).

14. Fishing lure according to any of the preceding Claims whatsoever, **characterised by** the fact that the first and second planar portions (10, 20) are defined by respective metallic foils (10, 20), and are produced and shaped by means of chip removal from flat elements made of metallic material.

15. Fishing lure according to Claim 14,
**characterised by** the act that the said metallic foils (10, 20) are produced and shaped by means of chemical photo-cutting.

16. Fishing lure according to Claim 14,
**characterised by** the act that the said metallic foils (10, 20) are produced and shaped by means of mechanical chip removal.

17. Fishing lure presenting a longitudinal axis (A) and comprising a main body (2), a blade (3) which is arranged frontally in relation to the body (2) in order to endow the body (2) itself with a specific hydro-dynamic behaviour, and at least one eyelet (4) (6) arranged along the main body (2) for the hooking of armatures with barbs; the fishing lure (1) being **characterised by** the fact that the main body (2) comprises two planar portions (10, 20) which can be assembled to each other, and which are provided with respective notches (11, 21) for mutual assembly.

18. Fishing lure according to Claim 17,
**characterised by** the fact of comprising a balancing head (30) which may be assembled to the planar portions (10, 20); the fishing lure (1) being provided with a number of anchoring means (37, 39) for anchoring the balancing head (30) to the two planar portions (10, 20).
